# EUROPEAN PATENT APPLICATION

(11) **EP 4 640 044 A1**
(43) Date of publication of application: **29.10.2025**
(21) Application number: 24833398.1
(22) Date of filing: 24.06.2024
(51) Int. Cl.: A01K 1/01, A01K 23/00

(54) **ROLLING SCREENING DEVICE AND CAT LITTER BOX**

(30) Priority: 29.02.2024 CN 202420383314 U
(71) Applicant: PETKIT NETWORK TECHNOLOGY (SHANGHAI) CO., LTD., Shanghai 201100 (CN)
(72) Inventor: GUO, Weike, Shanghai 201100 (CN); LIU, Xingling, Shanghai 201100 (CN); YUAN, Zheng, Shanghai 201100 (CN); MA, Yunxin, Shanghai 201100 (CN); MA, Xiaoqing, Shanghai 201100 (CN); ZHANG, Junchao, Shanghai 201100 (CN)
(74) Representative: Cabinet Beaumont
(86) International application number: PCT/CN2024/100927
(87) International publication number: WO 2025/179730

(57) **Abstract**

Provided are a rolling screener and a litter box. The rolling screener includes a drum body, a litter storage pad, an installation frame structure, and an elastic frame structure. The drum body is rotatable around the axis of the drum body, and the inner wall of the drum body is provided with a screen plate; the screen plate is configured to be driven to divide clumped litter from unclumped litter by screening when the drum body rotates. The litter storage pad is disposed on the inner wall of the drum body and covers part of the inner wall of the drum body. The installation frame structure is securely connected to the inner wall of the drum body and surrounds the litter storage pad in the circumferential direction of the litter storage pad, and the edge of the litter storage pad is buckled under the bottom of the installation frame structure. The elastic frame structure surrounds the litter storage pad in the circumferential direction of the litter storage pad; a portion of the elastic frame structure is sandwiched between the installation frame structure and the inner wall of the drum body, and another portion of the elastic frame structure fits the bottom of the installation frame structure and abuts against the edge of the litter storage pad.

## Description

This application claims priority to Chinese Patent Application No. 202420383314.3 filed with the China National Intellectual Property Administration (CNIPA) on Feb. 29, 2024, the disclosure of which is incorporated herein by reference in its entirety.

### TECHNICAL FIELD

The present application relates to the technical field of pet supplies, for example, a rolling screener and a litter box.

### BACKGROUND

A litter box with a screening function includes a drum and a housing. The drum is disposed in the housing and can rotate around the axis of the drum. A litter storage pad is disposed in the drum and used for accommodating litter. A screen plate and an opening are sequentially disposed on the inner wall of the drum in the circumferential direction. When the drum rotates around the axis of the drum, the litter falls on the screen plate under the action of gravity, unclumped litter falls under the screen plate through the screen plate, and clumped litter is blocked on the screen plate and then is directed out of the drum through the opening.

In the related art, in the drum of the litter box, installation manners of the litter storage pad and the inner wall of the drum mainly include the following two manners: one is a securing manner in which the litter storage pad and the inner wall of the drum are integrated, and the other one is a detachable manner in which the litter storage pad and the inner wall of the drum are secured by clamping. The first installation manner has difficulty in cleaning, and once the litter storage pad is damaged, replacement is difficult. In the second installation manner, when the drum is rotated, liquid excrement on the inner wall of the drum leaks from the installation clearance between the edge of the litter storage pad and the inner wall of the drum and flows to a base of the litter box under the litter storage pad, making it difficult to eliminate the odor and also bringing inconvenience to cleaning. In addition, due to the large installation clearance, the mixture of the excrement and the litter may also be stuck in the installation clearance, making it difficult to clean.

### SUMMARY

The present application provides a rolling screener that can reduce the residue or leakage of excrement and facilitate cleaning.

An embodiment of the present application provides a rolling screener. The rolling screener includes a drum body, a litter storage pad, an installation frame structure, and an elastic frame structure.

The drum body is rotatable around an axis of the drum body, and an inner wall of the drum body is provided with a screen plate, where the screen plate is configured to be driven to divide clumped litter from unclumped litter by screening when the drum body rotates.

The litter storage pad is disposed on the inner wall of the drum body and covers part of the inner wall of the drum body.

The installation frame structure is securely connected to the inner wall of the drum body and surrounds the litter storage pad in a circumferential direction of the litter storage pad, where an edge of the litter storage pad is buckled under a bottom of the installation frame structure.

The elastic frame structure surrounds the litter storage pad in the circumferential direction of the litter storage pad, where a portion of the elastic frame structure is sandwiched between the installation frame structure and the inner wall of the drum body, and another portion of the elastic frame structure is configured to fit the bottom of the installation frame structure and abut against the edge of the litter storage pad.

An embodiment of the present application further provides a litter box. The litter box includes a housing and the rolling screener described in any one of the preceding solutions, where the drum body is disposed in the housing and rotatable around the axis of the drum body relative to the housing.

### BRIEF DESCRIPTION OF DRAWINGS

FIG. 1 is a view illustrating the structure of a rolling screener according to an embodiment of the present application.
FIG. 2 is a view illustrating the partial structure of a rolling screener according to an embodiment of the present application.
FIG. 3 is a view illustrating the structure of a first housing, a litter storage pad, and an installation frame structure according to an embodiment of the present application.
FIG. 4 is a partial view of a connection joint between an installation frame structure and an elastic frame structure according to an embodiment of the present application.
FIG. 5 is an internal view of a rolling screener in a normal state according to an embodiment of the present application.
FIG. 6 is a partial enlarged view of the structure marked A in FIG. 5.
FIG. 7 is an internal view of a rolling screener in a screening state according to an embodiment of the present application.
FIG. 8 is a partial enlarged view of the structure marked B in FIG. 7.
FIG. 9 is a view of a drum body installed in a housing according to an embodiment of the present application.

### Reference list

- 100: drum body
- 110: first housing
- 120: second housing
- 200: screen plate
- 300: litter storage pad
- 310: convex ring
- 400: installation frame structure
- 410: installation portion
- 411: clamping male end
- 412: first connection hole
- 420: clamping portion
- 500: elastic frame structure
- 510: sandwiched portion
- 511: clamping female end
- 520: support portion
- 530: abutment portion
- 600: housing

### DETAILED DESCRIPTION

In the description of the present application, the terms "joined", "connected", and "secured" are to be understood in a broad sense unless otherwise expressly specified and limited. For example, the term "connected" may refer to "securely connected", "detachably connected", or "integrated"; may refer to "mechanically connected" or "electrically connected"; or may refer to "connected directly", "connected indirectly through an intermediary", "connected inside two components", or an interaction relation between two components. For those of ordinary skill in the art, specific meanings of the preceding terms in the present application may be understood based on specific situations.

In the present application, unless otherwise expressly specified and limited, when a first feature is described as being "on" or "below" a second feature, the first feature and the second feature may be in direct contact or be in contact via another feature between the two features instead of being in direct contact. Moreover, when the first feature is described as being "on", "above", or "over" the second feature, the first feature is right on, above, or over the second feature, the first feature is obliquely on, above, or over the second feature, or the first feature is simply at a higher level than the second feature. When the first feature is described as being "under", "below", or "underneath" the second feature, the first feature is right under, below, or underneath the second feature, the first feature is obliquely under, below, or underneath the second feature, or the first feature is simply at a lower level than the second feature.

In the description of this embodiment, orientations or position relations indicated by terms such as "above", "below", "left", and "right" are based on the drawings. These orientations or position relations are intended only to facilitate the description and simplify the operation and not to indicate or imply that a device or element referred to must have such particular orientations or must be configured or operated in such particular orientations. Thus, these orientations or position relations are not to be construed as limiting the present application. In addition, the terms "first" and "second" are only used for distinguishing between descriptions and have no special meanings.

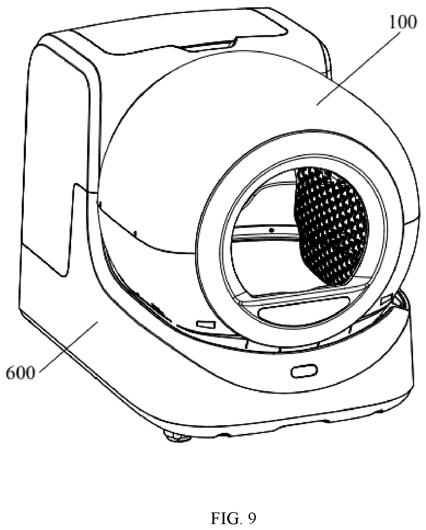

This embodiment provides a rolling screener and a litter box. As shown in FIG. 9, the litter box includes a housing 600 and the rolling screener provided in this embodiment; the rolling screener is disposed in the housing 600.

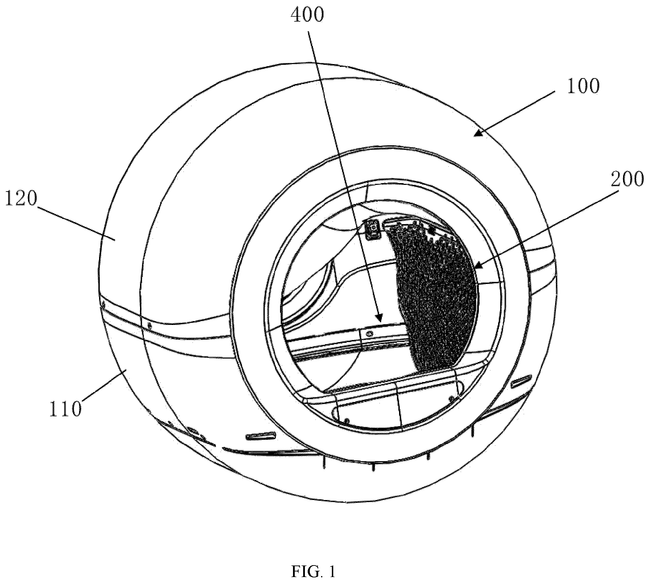

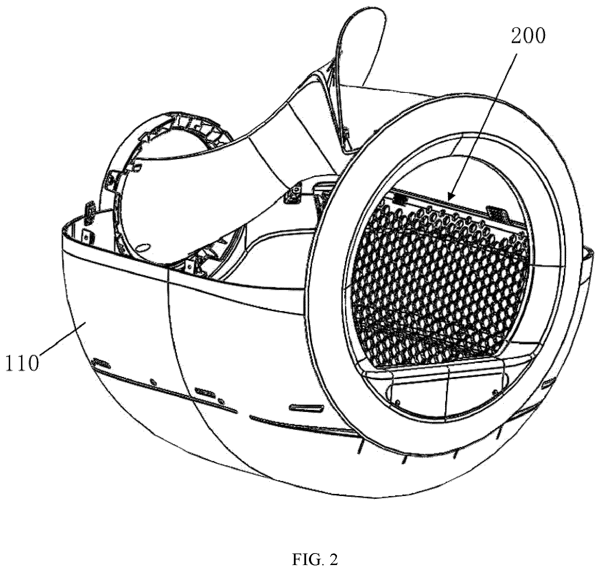

FIG. 1 is a view illustrating the structure of a rolling screener according to an embodiment of the present application. FIG. 2 is a view illustrating the partial structure of a rolling screener according to an embodiment of the present application. Referring to FIGS. 1 and 2, the rolling screener includes a drum body 100, a screen plate 200, a litter storage pad 300, and an installation frame structure 400.

The drum body 100 is disposed in the housing 600 and can rotate around the axis of the drum body 100. The screen plate 200 is disposed on the inner wall of the drum body 100. The screen plate 200, driven by the rotation of the drum body 100, can divide clumped litter from unclumped litter by screening. The clumped litter can be blocked on the screen plate 200, and the unclumped litter can pass through the screen plate 200 and fall into the drum body 100. The litter storage pad 300 is disposed on the inner wall of the drum body 100, covers part of the inner wall of the drum body 100, and is configured to separate the inner wall of the drum body 100 from the litter, thereby protecting the drum body 100 and preventing the litter from adhering to the inner wall of the drum body 100. The installation frame structure 400 is securely connected to the inner wall of the drum body 100 and surrounds the litter storage pad 300 in the circumferential direction of the litter storage pad 300. The edge of the litter storage pad 300 is buckled under the bottom of the installation frame structure 400. The installation frame structure 400 can enable the litter storage pad 300 to be stably and securely connected to the drum body 100.

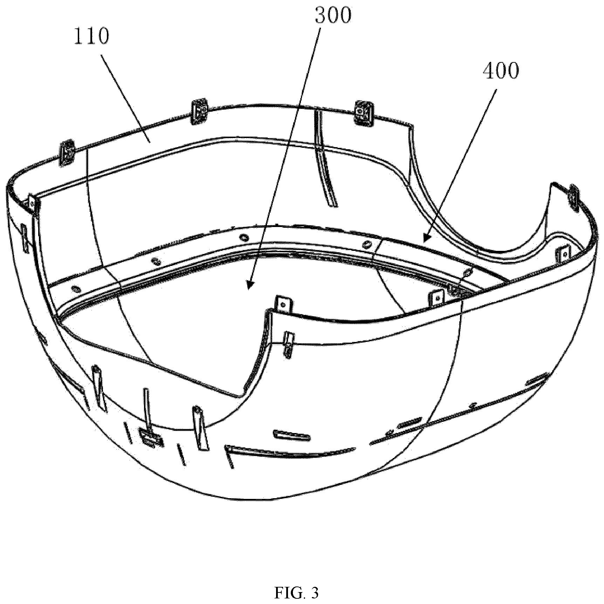

FIG. 3 is a view illustrating the structure of a first housing 110, a litter storage pad 300, and an installation frame structure 400 according to an embodiment of the present application. Referring to FIGS. 1 to 3, the drum body 100 includes the first housing 110 and a second housing 120 that are detachably snap-fitted with each other through a snap-fit structure. The litter storage pad 300 and the installation frame structure 400 are disposed on the inner wall of the first housing 110. The screen plate 200 is disposed on the inner wall of the second housing 120 and extends in the direction of the first housing 110. As shown in FIG. 1, when the drum body 100 is in a normal state, the first housing 110 is located below the second housing 120 in the direction of gravity.

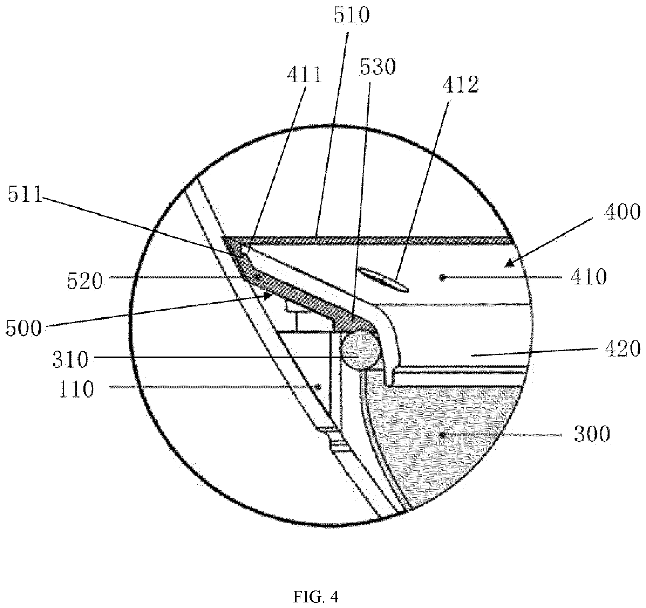

FIG. 4 is a partial view of a connection joint between an installation frame structure 400 and an elastic frame structure 500 according to an embodiment of the present application. Referring to FIG. 4, the installation frame structure 400 includes an installation portion 410 and a clamping portion 420 that are integrally formed. The installation portion 410 is securely connected to the drum body 100, and the clamping portion 420 is integrally formed on one side of the installation portion 410 facing away from the inner wall of the drum body 100 and disposed at an included angle from the installation portion 410. The edge of the litter storage pad 300 is provided with a convex ring 310. The convex ring 310 can be clamped within the included angle formed by the clamping portion 420 and the installation portion 410, that is, the installation portion 410 can press against the convex ring 310 in the direction perpendicular to the bottom of the litter storage pad 300; the clamping portion 420 can clamp the convex ring 310 in the circumferential direction of the litter storage pad 300, thereby ensuring the stability of the litter storage pad 300.

In an embodiment, an upper end surface of the installation portion 410 is inclined in the direction facing the geometric center of the installation portion 410 and gradually adjacent to the litter storage pad 300. Through the preceding arrangement, liquid excrement on the inner wall of the drum body 100 can be directly directed to the litter or the litter storage pad 300, thereby reducing the residence time of the liquid on the installation portion 410.

With continued reference to FIG. 4, the rolling screener further includes an elastic frame structure 500. The elastic frame structure 500 surrounds the litter storage pad 300 in the circumferential direction of the litter storage pad 300 and abuts against the installation frame structure 400. A portion of the elastic frame structure 500 is sandwiched between the installation frame structure 400 and the inner wall of the drum body 100, and another portion of the elastic frame structure 500 fits the bottom of the installation frame structure 400 and abuts against the edge of the litter storage pad 300. In this embodiment, the elastic frame structure 500 may be made of soft rubber.

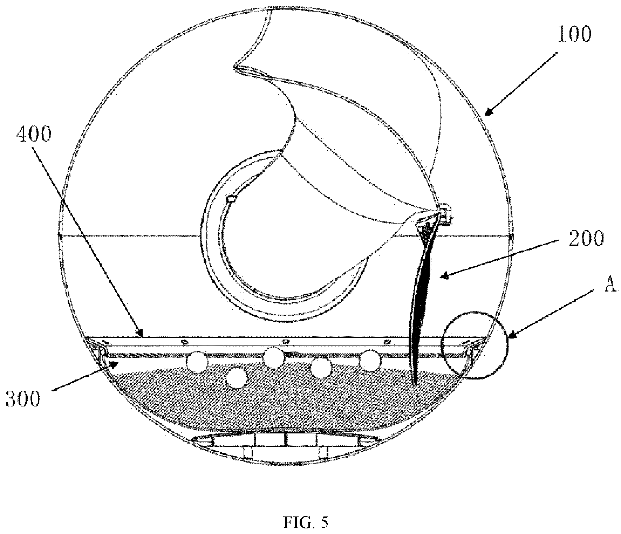

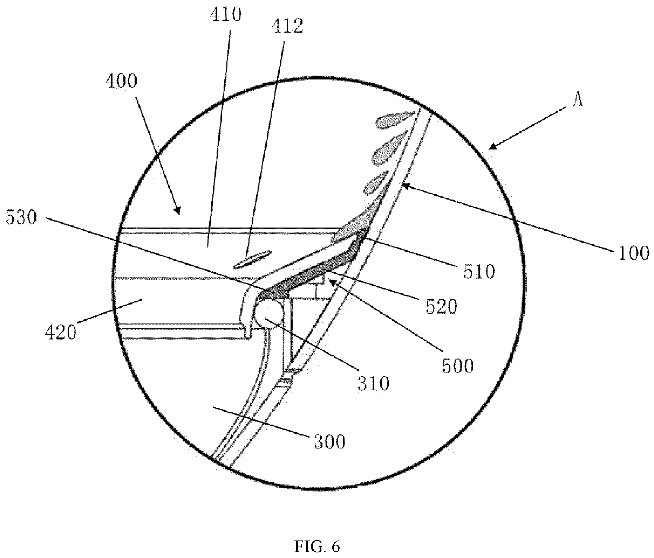

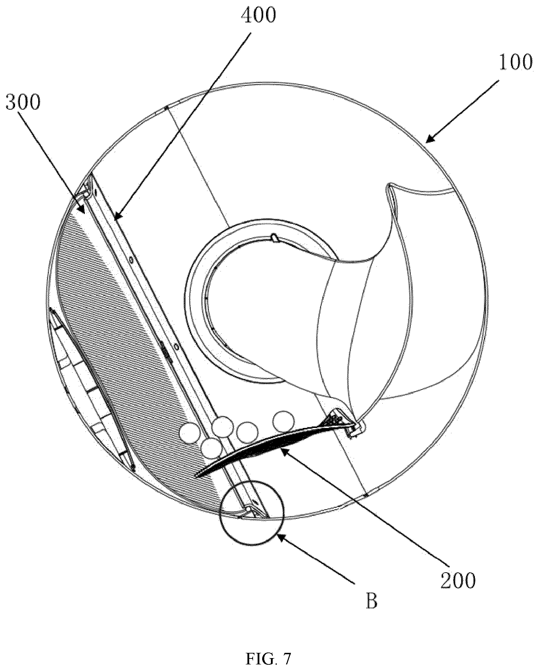

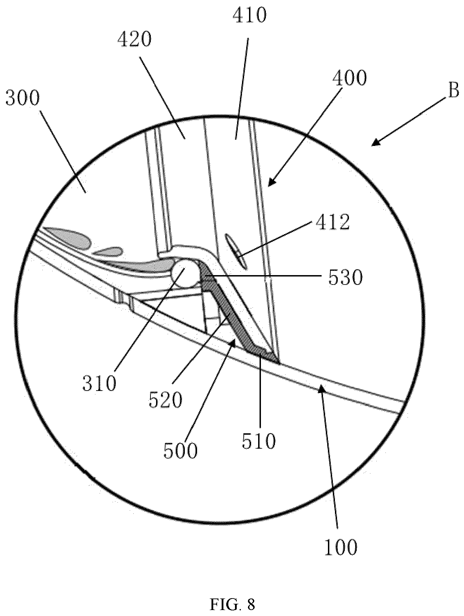

FIG. 5 is an internal view of a rolling screener in a normal state according to an embodiment of the present application. FIG. 6 is a partial enlarged view of the structure marked A in FIG. 5. FIG. 7 is an internal view of a rolling screener in a screening state according to an embodiment of the present application. FIG. 8 is a partial enlarged view of the structure marked B in FIG. 7. Referring to FIGS. 4 to 8, the elastic frame structure 500 includes a sandwiched portion 510 and a support portion 520 that are integrally formed. The sandwiched portion 510 is sandwiched between the outer side of the installation portion 410 and the inner wall of the drum body 100. The support portion 520 abuts against the bottom of the installation portion 410, and an end portion of the support portion 520 abuts against the convex ring 310. In other words, the sandwiched portion 510 can be in interference fit with the installation portion 410 and the inner wall of the drum body 100, and the end portion of the support portion 520 can be in interference fit with the convex ring 310 on the litter storage pad 300 and the bottom of the installation portion 410 to prevent an installation clearance between the installation frame structure 400 and the inner wall of the drum body 100 and an installation clearance between the installation frame structure 400 and the edge of the litter storage pad 300, thereby preventing excrement from remaining in the installation clearances or leaking from the installation clearances.

In an embodiment, one side of the installation portion 410 facing the sandwiched portion 510 is provided with a clamping male end 411, and one side of the sandwiched portion 510 facing the installation portion 410 is provided with a clamping female end 511; the clamping male end 411 and the clamping female end 511 are in a stepped structure and the clamping male end 411 is clamped into the clamping female end 511 to improve the connection reliability of the installation frame structure 400 and the elastic frame structure 500.

In other embodiments, the installation portion 410 is provided with multiple first connection holes 412 spaced apart from each other, an installation platform is circumferentially disposed within the drum body 100, and the installation platform is provided with multiple second connection holes at positions corresponding to the installation portion 410; the multiple first connection holes 412 are in one-to-one correspondence with the multiple second connection holes. A connection bolt passes through the support portion 520 and is connected to the multiple first connection holes 412 and the multiple second connection holes to achieve the reliable installation of the installation portion 410 on the installation platform.

In other embodiments, the installation frame structure 400 may also be connected to the drum body 100 in the following manner. For example, the installation portion 410 is provided with multiple insertion holes spaced apart from each other, and the installation platform circumferentially disposed within the drum body 100 is provided with multiple insertion columns at positions corresponding to the installation portion 410. The multiple insertion columns pass through the support portion 520 and are inserted into the multiple insertion holes in one-to-one correspondence. The preceding installation method is more convenient and can improve the efficiency of disassembly, cleaning, and assembly of the entire rolling screener.

In an embodiment, the elastic frame structure 500 further includes an abutment portion 530. The abutment portion 530 is integrally formed at one end of the support portion 520 facing away from the sandwiched portion 510 and can abut against the convex ring 310. The thickness of the abutment portion 530 is larger than the thickness of the support portion 520. Through the preceding arrangement, the clearance between the elastic frame structure 500 and the convex ring 310 can be further reduced, and the stability of the abutment action between the elastic frame structure 500 and the convex ring 310 can be improved.

## Claims

1. A rolling screener, comprising:
a drum body (100), wherein the drum body (100) is rotatable around an axis of the drum body (100), and an inner wall of the drum body (100) is provided with a screen plate (200), wherein the screen plate (200) is configured to be driven to divide clumped litter from unclumped litter by screening when the drum body (100) rotates;
a litter storage pad (300) disposed on the inner wall of the drum body (100) and covering part of the inner wall of the drum body (100);
an installation frame structure (400) securely connected to the inner wall of the drum body (100) and surrounding the litter storage pad (300) in a circumferential direction of the litter storage pad (300), wherein an edge of the litter storage pad (300) is buckled under a bottom of the installation frame structure (400); and
an elastic frame structure (500) surrounding the litter storage pad (300) in the circumferential direction of the litter storage pad (300), wherein a portion of the elastic frame structure (500) is sandwiched between the installation frame structure (400) and the inner wall of the drum body (100), and another portion of the elastic frame structure (500) is configured to fit the bottom of the installation frame structure (400) and abut against the edge of the litter storage pad (300).

2. The rolling screener of claim 1, wherein the installation frame structure (400) comprises an installation portion (410) securely connected to the drum body (100); and
the elastic frame structure (500) comprises a sandwiched portion (510) sandwiched between the installation portion (410) and the inner wall of the drum body (100).

3. The rolling screener of claim 2, wherein an upper end surface of the installation portion (410) is inclined in a direction facing a geometric center of the installation portion (410) and gradually adjacent to the litter storage pad (300).

4. The rolling screener of claim 2, wherein one side of the installation portion (410) facing the sandwiched portion (510) is provided with a clamping male end (411), and one side of the sandwiched portion (510) facing the installation portion (410) is provided with a clamping female end (511), wherein the clamping male end (411) is clamped into the clamping female end (511).

5. The rolling screener of claim 2, wherein the installation frame structure (400) further comprises a clamping portion (420) integrally formed on the installation portion (410), and the edge of the litter storage pad (300) is provided with a convex ring (310) clamped on one side of the clamping portion (420) facing the inner wall of the drum body (100); and
the elastic frame structure (500) further comprises a support portion (520) integrally formed on the sandwiched portion (510) and abutting against a bottom of the installation portion (410), wherein an end portion of the support portion (520) is configured to abut against the convex ring (310).

6. The rolling screener of claim 5, wherein the elastic frame structure (500) further comprises an abutment portion (530) integrally formed at one end of the support portion (520) facing away from the sandwiched portion (510) and abutting against the convex ring (310), wherein a thickness of the abutment portion (530) is larger than a thickness of the support portion (520).

7. The rolling screener of claim 2, wherein the installation portion (410) is provided with a plurality of first connection holes (412) spaced apart from each other, the drum body (100) is provided with a plurality of second connection holes at positions corresponding to the installation portion (410), and the plurality of first connection holes (412) are in one-to-one correspondence with the plurality of second connection holes; and
the elastic frame structure (500) further comprises a support portion (520) integrally formed with the sandwiched portion (510) and abutting against a bottom of the installation portion (410), wherein a connection bolt is configured to pass through the support portion (520) and be connected to one of the plurality of first connection holes (412) and one of the plurality of second connection holes.

8. The rolling screener of claim 2, wherein the installation portion (410) is provided with a plurality of insertion holes spaced apart from each other, and the drum body (100) is provided with a plurality of insertion columns at positions corresponding to the installation portion (410); and
the elastic frame structure (500) further comprises a support portion (520) integrally formed with the sandwiched portion (510) and abutting against a bottom of the installation portion (410), wherein the plurality of insertion columns are configured to pass through the support portion (520) and be inserted into the plurality of insertion holes in one-to-one correspondence.

9. The rolling screener of any one of claims 1 to 8, wherein the drum body (100) comprises a first housing (110) and a second housing (120) that are detachably snap-fitted with each other; the litter storage pad (300), the installation frame structure (400), and the elastic frame structure (500) are disposed on an inner wall of the first housing (110), the screen plate (200) is disposed on an inner wall of the second housing (120), and the first housing (110) is configured to be located below the second housing (120) in a direction of gravity when the drum body (100) is in a normal state.

10. A litter box, comprising a housing (600) and the rolling screener of any one of claims 1 to 9, wherein the drum body (100) is disposed in the housing (600) and rotatable around the axis of the drum body (100) relative to the housing (600).
